# FASCICULE DE BREVET EUROPEEN

(11) **EP 3 995 315 B1**
(45) Date de publication et mention de la délivrance du brevet: **26.06.2024**
(21) Numéro de dépôt: 21206353.1
(22) Date de dépôt: 04.11.2021
(51) Int. Cl.: B41J 2/21, B41J 25/00, B05B 12/04, B05B 13/04, B62D 65/06, B41J 3/407

(54) **PROCÉDÉ ET INSTALLATION D'APPLICATION D'UN PRODUIT DE REVÊTEMENT SUR UNE SURFACE**
VERFAHREN UND ANLAGE ZUR AUFBRINGUNG EINES BESCHICHTUNGSPRODUKTS AUF EINE OBERFLÄCHE
METHOD AND INSTALLATION FOR APPLYING A COATING PRODUCT ON A SURFACE

(30) Priorité: 05.11.2020 FR 2011364
(43) Date de publication de la demande: 11.05.2022
(73) Titulaire: Exel Industries, 51200 Epernay (FR)
(72) Inventeur: PROVENAZ, Philippe, 75009 PARIS (FR); CHEVRON, Didier, 75009 PARIS (FR)
(74) Mandataire: Lavoix

(56) Documents cités:
- EP-A1- 1 884 365
- EP-A1- 3 932 678
- WO-A1-2014/060005
- DE-A1-102019 110 564
- DE-C2- 4 120 293
- JP-A- 2016 077 971
- JP-A- 2019 064 176
- US-A1- 2019 232 321
- US-A1- 2020 215 834

## Description

L'invention a trait à un procédé d'application d'un cordon de produit de revêtement sur une surface à revêtir. L'invention a également trait à une installation d'application d'un tel cordon sur une telle surface.

Au sens de la présente invention, un produit de revêtement est un produit destiné à être appliqué sur une surface en constituant sur celle-ci une couche. Un produit de revêtement peut, notamment, être une colle ou un mastic, avec une viscosité relativement élevée, ou une peinture, une encre ou un vernis.

Au sens de la présente invention, un cordon est une couche appliquée sur une surface qui présente une largeur strictement inférieure à sa longueur et une épaisseur strictement inférieure à sa largeur. Par exemple, l'épaisseur du cordon peut être de quelques millimètres, alors que sa largeur est comprise entre 5 et 100 millimètres et que sa longueur peut être supérieure à 1 mètre.

Pour permettre une application sur des surfaces tridimensionnelles, une tête d'application est parfois montée sur le poignet d'un robot multiaxe. Pour d'autres applications, la tête d'application est fixe et un objet, qui définit la surface à revêtir, est déplacé devant cette tête par un robot multiaxe. Le cordon est, le plus souvent, généré par l'extrusion ou l'éjection, à travers une fente calibrée, du produit de revêtement qui crée un motif plan. Le mouvement relatif de la tête d'application et de l'objet, qui définit la surface à revêtir, doit être perpendiculaire à la direction de la fente. La largeur du cordon est généralement fixe et dépend de la pression d'alimentation du produit de revêtement et de la géométrie de la fente. Un changement d'orientation de la tête d'application par rapport à la surface à revêtir peut résulter dans une modification de la largeur du cordon. Le fait de changer l'orientation de la tête d'application par rapport à la surface à revêtir ou de suivre une partie gauche de cette surface ou le fait d'ajuster la largeur du cordon nécessite de dédier un axe spécifique du robot à cette fonction ou d'ajouter un axe sur le robot. Ceci augmente la complexité du robot et, par voie de conséquence, le coût d'une installation d'application d'un cordon.

Ce problème a été traité en utilisant des têtes d'application avec mouvement tourbillonnaire, comme envisagé dans WO-A-2001/85352. Le mouvement tourbillonnaire requiert des moyens pneumatiques et/ou électriques d'entrainement du matériau, ce qui est relativement complexe.

D'autre part, il est connu de KR-A-101355906 de déplacer une tête d'impression en translation, sans rotation, pour constituer un cordon en forme de cadre rectangle, ce qui ne donne pas complètement satisfaction dans les angles lorsque deux buses sont prévues et ce qui induit une surconsommation de produit de revêtement lorsque quatre buses sont prévues en losange. En outre, ce matériel ne permet pas d'appliquer facilement un cordon de géométrie complexe, notamment sur une surface gauche.

Selon une autre approche, il est connu de US-A-2020/086562 de disposer des buses sur une tête d'impression d'une façon telle qu'au moins l'une d'entre elles n'est pas alignée avec une autre buse lors de l'application. Ceci permet d'éviter des manques dans une couche de produit, mais induit une surconsommation de produit de revêtement dans le cas de l'application d'un cordon.

D'autre part, EP-A-1884365 enseigne d'appliquer un produit de revêtement au moyen d'une tête d'impression qui n'est pas nécessairement mise en rotation en fonction de la géométrie d'une pièce à revêtir. Cette approche n'est pas facilement adaptable à la géométrie réelle des pièces.

C'est à ces inconvénients qu'entend plus particulièrement remédier l'invention en proposant un nouveau procédé d'application d'un cordon de produit de revêtement sur une surface à revêtir, grâce auquel un cordon d'épaisseur uniforme ou quasi-uniforme peut être appliqué, avec une géométrie bien définie, y compris dans le cas où ce cordon présente une forme complexe et/ou gauche.

A cet effet, l'invention concerne un procédé d'application d'un cordon de produit de revêtement sur une surface à revêtir, au moyen d'une tête d'impression équipée de plusieurs buses centrées chacune sur un axe central, l'application de produit de revêtement ayant lieu en déplaçant la tête d'impression et la surface à revêtir l'une par rapport à l'autre, par un déplacement relatif de la tête d'impression le long d'une trajectoire courbe fixe par rapport à la surface, sans mise en rotation de la tête d'impression autour d'un axe parallèle aux axes centraux des buses. Ce procédé comprend une étape de sélection de certaines des buses pour un point de la trajectoire, en fonction de la direction de la trajectoire en ce point et/ou en fonction d'un point précédent de la trajectoire déjà atteint par la tête d'impression et de la direction de la trajectoire en ce point précédent, et une étape d'activation en ce point des buses sélectionnées. Conformément à l'invention, les buses sélectionnées sont disposées sur une ligne, ou font partie d'un groupe de buses délimité par une ligne, dont la droite de régression est confondue avec une droite perpendiculaire à la direction de la trajectoire ou la plus proche possible d'une droite perpendiculaire à la direction de la trajectoire parmi les lignes qu'il est possible de définir avec les buses de la tête d'impression.

Grâce à l'invention, la sélection de certaines des buses de la tête d'impression définies grâce à la ligne dont la droite de régression linéaire est confondue avec, ou la plus proche possible de, une droite perpendiculaire à la direction de la trajectoire, permet d'adapter, en fonction de la direction de la trajectoire à suivre, le nombre et la disposition des buses d'impression qui sont activées, ce qui permet d'appliquer le produit de revêtement uniquement à partir des buses les mieux placées pour ce faire. La sélection et l'activation des buses peuvent varier le long de la trajectoire, afin d'adapter de façon dynamique l'application de produit, en fonction de la trajectoire. Ainsi, la quantité de produit de revêtement appliqué est optimisée, de même que la géométrie du cordon déposé sur la surface à revêtir.

Selon les aspects avantageux mais non obligatoires de l'invention, un tel procédé peut incorporer une ou plusieurs des caractéristiques suivantes, prise selon toute combinaison techniquement admissible
- Les buses de la tête d'impression sont disposées en rangées et en colonnes, alors que, pendant l'étape de sélection, les buses d'une portion de certaines rangées et/ou d'une portion de certaines colonnes sont sélectionnées ensemble pour activation.
- Les buses de la tête d'impression sont disposées sur au moins un arc de cercle, alors que, pendant l'étape de sélection, les buses d'une portion de l'arc de cercle sont sélectionnées ensemble pour activation.
- La largueur d'une zone de revêtement issu d'une buse sélectionnée et activée est adaptée en fonction de la distance entre cette zone et une zone adjacente issue d'une autre buse.
- La largeur de la zone de revêtement est adaptée en faisant varier une fréquence d'activation d'un dispositif d'alimentation de la buse sélectionnée et activée.
- La largeur de la zone de revêtement issue de la buse sélectionnée et normalement activée est localement réduite à zéro pour ne pas interférer avec une ou des zones adjacentes de produit de revêtement.
- La largeur de la tête d'impression, mesurée perpendiculairement à la direction de la trajectoire, est supérieure ou égale à la largeur du cordon à appliquer, la largeur du cordon étant également mesurée perpendiculairement à la direction de la trajectoire, alors que, parmi les buses sélectionnées lors de l'étape de sélection, seules sont activées celles qui sont disposées en regard de la trace du cordon sur la surface à revêtir.
- Des informations de direction et de vitesse relatives de la tête d'impression par rapport à la surface à revêtir sont fournies à l'unité électronique de contrôle par une unité de commande d'un robot permettant le déplacement relatif de la tête d'impression et de la surface à revêtir.
- Des informations de direction et de vitesse relatives de la tête d'impression par rapport à la surface à revêtir sont fournies à l'unité électronique de contrôle par un accéléromètre ou une centrale à inertie embarqué sur un robot permettant le déplacement relatif de la tête d'impression et de la surface à revêtir.

Selon un autre aspect, l'invention concerne une installation d'application d'un cordon de produit de revêtement sur une surface à revêtir, cette installation comprenant une tête d'impression équipée de plusieurs buses centrées chacune sur un axe central, un robot multiaxe contrôlé par une unité électronique de commande et permettant le déplacement relatif de la tête d'impression et de la surface, sans mise en rotation autour d'un axe parallèle aux axes centraux des buses, le long d'une trajectoire fixe par rapport à la surface, ainsi qu'une unité de contrôle de chaque buse. L'unité de contrôle est configurée pour sélectionner et pour activer certaines buses de la tête d'impression en un point de la trajectoire en fonction, au moins, de la direction de la trajectoire en ce point et/ou en fonction d'un point précédent de la trajectoire déjà atteint par la tête d'impression et de la direction de la trajectoire en ce point précédent. Conformément à l'invention, l'unité de contrôle est configurée pour sélectionner des buses qui sont disposées sur une ligne, ou font partie d'un groupe de buses délimité par une ligne, dont la droite de régression est confondue avec une droite perpendiculaire à la direction de la trajectoire ou la plus proche possible d'une droite perpendiculaire à la direction de la trajectoire parmi les lignes qu'il est possible de définir avec les buses de la tête d'impression.

Cette installation permet de mettre en oeuvre le procédé de l'invention et induit les mêmes avantages que celui-ci.

De façon avantageuse, les buses de la tête d'impression sont disposées sur au moins un arc de cercle alors que, de préférence, un corps de la tête d'impression a une section circulaire.

L'invention sera mieux comprise et d'autres avantages de celle-ci apparaitront plus clairement à la lumière de la description qui va suivre de six modes de réalisation d'un procédé et d'une installation conformes à son principe, donnée uniquement à titre d'exemple et faite en référence aux dessins annexés dans lesquels :
- [Fig 1] La figure 1 est une représentation schématique de principe, en vue de face, d'une installation conforme à l'invention et configurée pour mettre en oeuvre un procédé conforme à l'invention ;
- [Fig 2] La figure 2 est une représentation schématique de principe d'une partie d'un cordon de mastic en cours d'application au moyen de l'installation de la figure 1 et selon un premier procédé d'application conforme à l'invention ;
- [Fig 3] La figure 3 est une représentation analogue à la figure 2 pour une installation et un procédé d'application conformes à un deuxième mode de réalisation de l'invention ;
- [Fig 4] La figure 4 est une représentation analogue à la figure 2 pour une installation et un procédé d'application conformes à un troisième mode de réalisation de l'invention.
- [Fig 5] La figure 5 est une représentation schématique d'une installation d'application, montrant un cordon à réaliser et d'une tête d'application, avant mise en oeuvre d'un quatrième procédé conforme à l'invention ;
- [Fig 6] La figure 6 est une représentation de la trace des buses par rapport au cordon, dans l'installation de la figure 5, lors de la mise en oeuvre du quatrième procédé conforme à l'invention ;
- [Fig 7] La figure 7 est une représentation schématique d'un cinquième procédé d'application mis en oeuvre pour créer un cordon dans une cinquième installation conforme à l'invention ; et
- [Fig 8] La figure 8 est une représentation analogue à la figure 7, correspondant à une mise en oeuvre d'un sixième procédé conforme à l'invention.

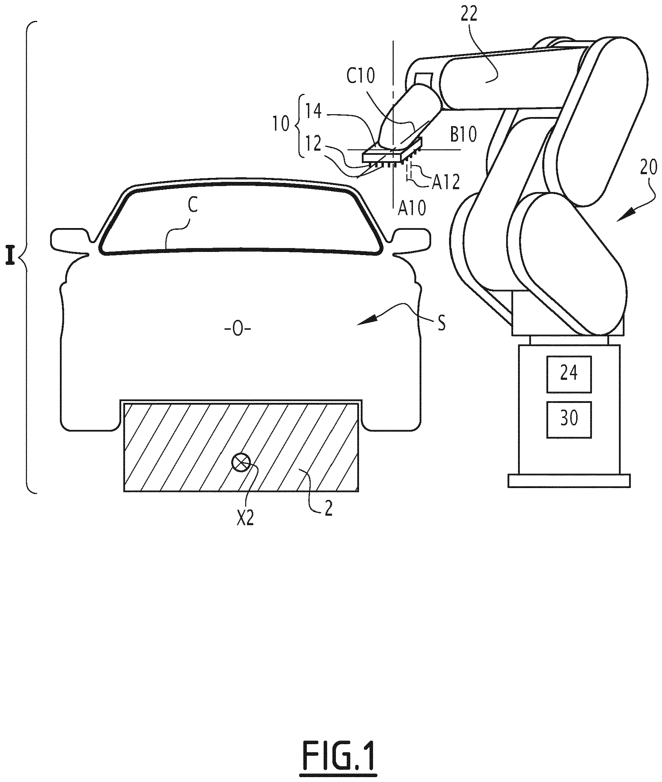

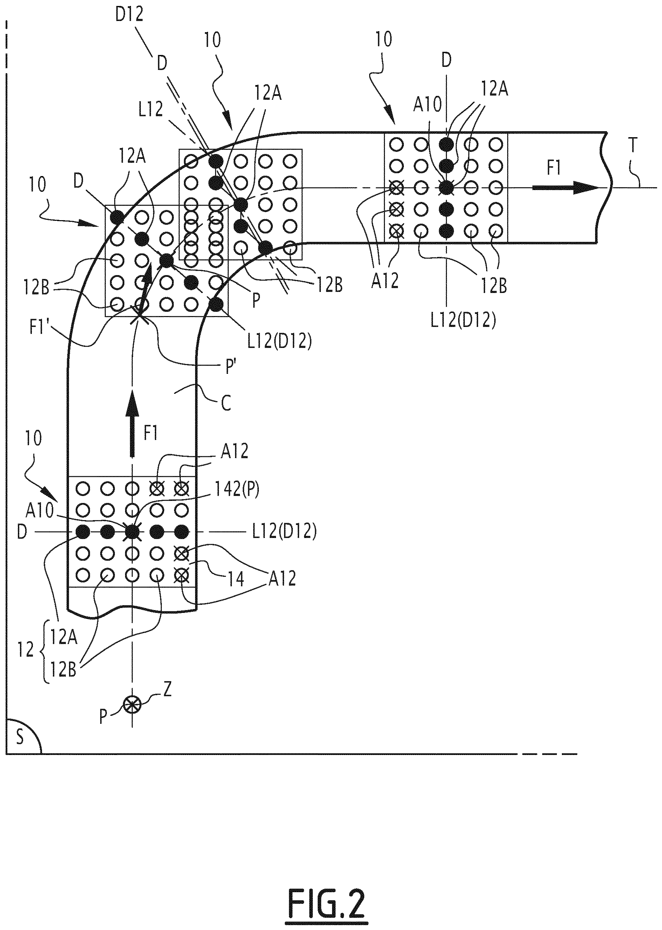

L'installation I représentée aux figures 1 et 2 est prévue pour l'application d'un cordon C de colle sur des objets O qui, dans l'exemple, sont des carrosseries de véhicules automobiles. Plus précisément, dans cet exemple ; l'installation I permet la création d'un cordon C de colle pour la fixation d'un pare-brise sur une surface S de la carrosserie d'un véhicule automobile.

En variante, les objets à revêtir peuvent être des parties de carrosserie de véhicule automobile, par exemple des portes ou des pare-chocs ou, plus généralement, tout objet pouvant être revêtu, par exemple une partie de carlingue d'aéronef ou une caisse d'appareil électroménager, ces exemples n'étant pas limitatifs.

En variante, le produit appliqué est une peinture. Dans ce cas, le cordon C peut être une bande de couleur contrastée sur la carrosserie d'un véhicule automobile.

L'installation I comprend un convoyeur 2 prévu pour déplacer les objets O le long d'un axe de convoyage X2 perpendiculaire au plan de la figure 1.

L'installation I comprend également une tête d'application 10 montée à l'extrémité du bras 22 d'un robot multiaxe 20 disposé au voisinage du convoyeur 2.

L'installation I comprend également une unité électronique de commande 24 capable de contrôler le robot 20 et une unité électronique de commande 30 capable de contrôler la tête d'application 10 qu'il porte.

La tête d'application 10 comprend plusieurs buses 12 qui sont identiques entre elles et montées sur une face d'un corps 14, parallélépipédique et rigide, de la tête d'impression. A titre d'exemple, les buses peuvent être du type décrit en DE 10 2009 029 946 A1. D'autres types de buses sont également envisageables, en fonction de la nature, en particulier de la viscosité, du produit de revêtement à appliquer.

On note A10 un axe central de la tête d'impression 10 qui passe par le centre de la surface du corps 14 sur laquelle débouchent les buses 12 et qui est orienté vers la surface S à revêtir lorsque la tête d'impression est activée pour appliquer le produit de revêtement. On note A12 l'axe central d'une buse 12 qui est situé au centre du jet de produit de revêtement éjecté par cette buse. Chaque buse 12 est centrée sur son axe central A12. Les axes A12 sont parallèles à l'axe A10.

L'unité de contrôle électronique 30 est configurée, notamment, pour piloter l'activation des différentes buses 12. L'unité électronique 30 de contrôle des buses n'est pas forcément disposée dans le robot 20.

Des informations de direction relative et de vitesse relative de la tête d'impression 10 par rapport à la surface S à revêtir sont fournies à l'unité électronique 30 de contrôle par l'unité de commande 24 du robot 20.

En variante, les unités de commande 24 et 30 peuvent être confondues.

Comme il ressort plus particulièrement de la figure 2 où la surface S à revêtir est plane et parallèle au plan de cette figure, lorsqu'il est nécessaire de créer un cordon C de produit de revêtement sur une surface S, telle que la surface d'une carrosserie de véhicule automobile O dans l'exemple des figures 1 et 2, la tête d'impression 10 est déplacée le long d'une trajectoire T. Cette trajectoire T est parallèle à la surface S, donc plane dans cet exemple, et orientée dans le sens des flèches F1 à la figure 2 qui représentent la direction de la trajectoire en différents points P. La trajectoire T est séparée de la surface S à revêtir d'une distance qui constitue la distance d'application du produit de revêtement.

En pratique, cette trajectoire T s'étend sensiblement en regard du centre du cordon C à réaliser et peut être courbe. Par exemple, à la figure 2, la trajectoire T comporte un virage qui correspond à une zone en courbe du cordon C. La trajectoire T est une courbe le long de laquelle circule la tête d'impression pour appliquer le cordon C. Cette courbe peut être plane, comme représenté à la figure2, ou gauche, c'est-à-dire tridimensionnelle.

Sur cette figure 2, la tête d'impression 10 est représentée dans quatre positions, le long de la trajectoire T à savoir, une première position, en bas à gauche de la figure 2, en regard d'un tronçon rectiligne du cordon C, une deuxième position en entrée du virage, une troisième position en sortie du virage et une quatrième position en regard d'un tronçon rectiligne du cordon C défini après le virage, dans le sens des flèches F1, selon lequel la tête d'impression 10 parcourt la trajectoire T.

Comme le montre la figure 2, les buses 12 sont ici au nombre de 25 sur le corps 14 et sont disposées sur une surface carrée en une matrice de cinq rangées et de cinq colonnes de cinq buses chacune, avec leurs axes respectifs A12 perpendiculaires au plan de cette figure. Sur la figure 1, les buses sont représentées en saillie du corps 14. Elles peuvent toutefois être totalement intégrées à ce corps et affleurantes à la surface carrée.

Dans un but de simplification et d'optimisation des axes du robot 20, le déplacement du corps 14 de la tête d'impression 10 le long de la trajectoire T a lieu par une translation qui est une combinaison de translation rectiligne et de translation circulaire, c'est-à-dire un mouvement de translation du corps 14 le long de la trajectoire T qui est courbe, sans mise en rotation de ce corps 14 autour de son axe central A10, qui passe par son centre géométrique 142, ou d'un axe, parallèle à l'axe A10 et passant par autre point du corps 14.

Sur la figure 2, les buses 12 noires représentent des buses actives lors du déplacement du corps 14 le long de la trajectoire T, alors que les buses blanches représentent des buses non actives. Par « active », on entend qu'une buse éjecte du produit de revêtement lors du déplacement de la tête d'impression 10. Par « non active », on entend qu'une buse n'éjecte pas de produit de revêtement lors de ce déplacement.

Afin de garantir une bonne application du produit de revêtement destiné à constituer le cordon C, les buses 12 sont sélectionnées en fonction de l'emplacement où se trouve la tête d'impression 10 le long de la trajectoire T, c'est-à-dire du point P de la trajectoire dans lequel se trouve un point donné de la tête d'impression, dans l'exemple son centre géométrique. En pratique, la détermination de l'emplacement de la tête d'impression 10 le long de la trajectoire T a lieu en déterminant la position du centre 142, ou d'un autre point remarquable du corps 14, le long de cette trajectoire.

On suppose la trajectoire T connue de l'unité de contrôle électronique 30 en tout point P, notamment en ce qui concerne sa direction, définie comme une tangente à la trajectoire en ce point et représentée par les flèches F1. En un point P de la trajectoire, l'unité 30 est en mesure de déterminer une droite D perpendiculaire à la direction de la trajectoire, comme représenté pour les quatre positions de la tête d'impression visibles à la figure 2.

Alternativement, la trajectoire T peut ne pas être connue au préalable de l'unité électronique 30. Elle est toutefois connue de l'unité électronique 24 de commande du robot 20. Dans le cas d'une tête d'impression 10 embarquée sur le robot 20, sa direction et sa vitesse de déplacement peuvent être déterminées en embarquant un accéléromètre ou une centrale d'inertie avec la tête d'impression. Cet accéléromètre ou cette centrale d'inertie permet de connaître le déplacement de la tête d'impression, donc de reconstituer localement en temps réel la trajectoire T suivie par la tête d'impression. Dans ce cas également, il est possible de déterminer une droite D perpendiculaire à la direction de la trajectoire T en chaque point P de la trajectoire.

Dans tous les cas, on définit en un point P de la trajectoire un axe Z dirigé du centre de la tête d'impression vers la surface S à revêtir. Cet axe Z est perpendiculaire au plan de la figure 2. Le fait que le déplacement du corps 14 de la tête d'impression 10 le long de la trajectoire T a lieu par une translation correspond au fait que ce déplacement a lieu sans rotation autour de l'axe Z.

L'unité 30 sélectionne, parmi les buses 12, un groupe de buses dont la trace sur le cordon C est la plus proche possible de la droite D. On note 12A les buses de ce groupe de buses et 12B les autres buses de la tête d'impression. Les buses 12A sont, en pratique, disposées de telle sorte que la droite de régression associée à la position des buses 12A soit la plus proche possible de la droite D. Ici, les buses 12A sont disposée sur une ligne L12.

Dans l'exemple de la figure 2, dans la première position de la tête d'impression, le groupe de buses 12A sélectionnées correspond à une rangée de la matrice de buses 12 formée sur le corps 14. La ligne L12 est donc la ligne moyenne de cette rangée, qui est une droite. Dans la deuxième position, le groupe de buses 12A sélectionnées correspond à une diagonale de la matrice de buses 12. La ligne L12 est donc la ligne moyenne de cette diagonale, qui est également une droite. Dans la troisième position, le groupe de buses 12A sélectionnées représente une ligne brisée L12 sur la surface du corps 14, cette ligne brisée L12 ayant, parmi les lignes qu'il est possible de créer dans la matrice de buses 12, la droite de régression D12 qui est la plus proche de la droite D perpendiculaire à la trajectoire T. Dans la quatrième position, le groupe de buses 12A sélectionnées correspond à une colonne de la matrice de buses 12. La ligne L12 est donc la ligne moyenne de cette colonne et est également une droite. Dans les première, deuxième et quatrième positions de la tête d'impression représentées à la figure 2, la ligne L12 est confondue avec sa droite de régression D12 et avec la droite D. Dans la troisième position, la ligne brisée L12 est approximée par la droite de régression D12 qui est parallèle à, mais non confondue avec, la droite D.

Dans les deux parties rectilignes du cordon C correspondant aux première et quatrième positions représentées à la figure 2, les deux groupes de buses 12A sélectionnées sont formés par deux lignes de buses perpendiculaires, à savoir une rangée de buses 12 dans la première configuration et une colonne de buses 12 dans la deuxième configuration.

Dans ce mode de réalisation, toutes les buses 12A sélectionnées en un point P sont activées pour appliquer le produit de revêtement. C'est pourquoi les buses 12A sont noires sur la figure 2.

Ainsi, le procédé qui consiste à sélectionner en un point P certaines des buses, à savoir les buses 12A, en fonction de la direction F1 de la trajectoire T en ce point, permet, après une étape d'activation de ces buses, d'appliquer le produit de revêtement de façon efficace et économique, avec assez de buses en service pour éviter des zones non revêtues, ou « manques », au sein du cordon C, mais sans surconsommer de produit de revêtement ni créer de surépaisseur dans le cordon.

Selon une variante représentée uniquement pour la deuxième position de la tête d'impression 10 à la figure 2, la détermination des buses 12A a lieu en tenant compte d'un point P' de la trajectoire précédemment atteint par la tête d'impression 10 et de la direction F1' de la trajectoire en ce point précédent P'. Cette approche permet de savoir quelles étaient les buses actives 12A au point précédent P' et quelles doivent être les buses 12A à activer au point P. Cette variante est également applicable aux autres positions de la tête d'impression le long de la trajectoire T et autres modes de réalisation décrits ci-après.

La variante utilisant le point précédent P' et la direction F1' peut être mise en oeuvre à la place de, ou en complément à, l'approche de base utilisant uniquement la direction F1 au point P.

La sélection des buses 12A au sein de la matrice des buses 12 peut avoir lieu de façon anticipée par rapport à la réalisation du cordon C, dès que la trajectoire T est connue. En d'autres termes, l'étape de sélection des buses 12A peut avoir lieu préalablement à l'utilisation du robot 20 et de la tête d'application 10.

Dans ce cas, il est alors possible de prendre aussi en compte la surface S dans le choix des buses 12A. Il en résulte une modification de l'algorithme de régression linéaire qui calcule, à partir de la ligne L12, la droite D12 en prenant en compte l'impact des buses sur la surface S.

De plus, il est alors possible de prévoir des cordons avec angles droits, réalisés avec une matrice rectangulaire, sans avoir de recouvrement dans le coin intérieur dû au changement de direction à 90 degrés par exemple.

En variante, les étapes de sélection et d'activation se suivent immédiatement. En particulier, la sélection des buses 12A à activer peut avoir lieu à chaque pas d'avance du bras 22 du robot 20, en fonction de la trajectoire T qui est enregistrée dans l'unité électronique de commande 30. Il est possible de connaitre en temps réel l'information de vitesse du centre outil du robot selon des axes d'un repère orthogonal lié à la pièce à revêtir. En intégrant ces valeurs de vitesse, on en déduit les variations de position de la têtes d'impression par rapport à la pièce. Cette approche permet de tenir compte de la position réelle de la tête d'impression en cours d'application du cordon C et de tenir compte d'un éventuel ajustement de la trajectoire T en fonction de cette position réelle.

La façon de déterminer quelles buses doivent constituer les buses 12A à activer, au sein de la matrice de buses 12, est au choix du programmateur de l'application et dépend de la façon d'approximer une droite D perpendiculaire à la trajectoire T au moyen d'une ligne de buses. Il est possible d'utiliser pour ce faire des méthodes de régression (linéaire ou non, polynomiale, .. ) faisant intervenir des calculs d'erreur (quadratique ou non, méthodes les moindres carrés, ...).

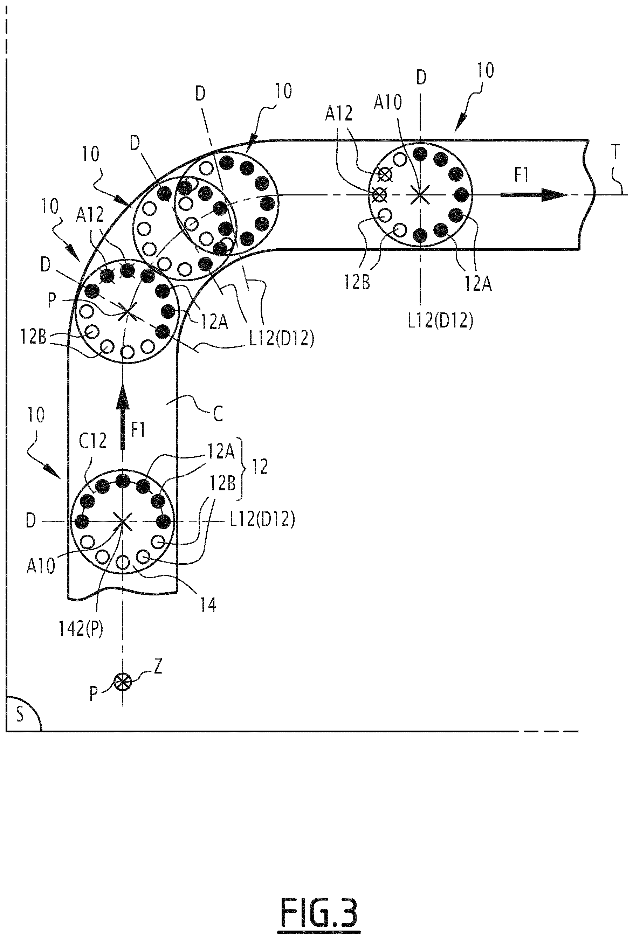

Dans les deuxième à cinquième modes de réalisation de l'invention représentée aux figures 3 et suivantes, les éléments analogues à ceux du premier mode de réalisation portent les mêmes références.

La surface S à revêtir est, là encore, supposée plane et parallèle aux plans des figures 3 et suivantes et le déplacement de la tête d'impression le long de sa trajectoire T, définie comme dans le premier mode de réalisation et plane également, a lieu par une combinaison de translations parallèles à cette surface S, sans rotation autour de l'axe central A10 de la tête d'impression, défini comme dans le premier mode de réalisation, ou d'un axe parallèle à celui-ci, ni de l'axe Z défini comme dans le premier mode de réalisation.

Dans ce qui suit on décrit principalement ce qui distingue ces modes de réalisation de celui des figures 1 et 2, étant précisé que les procédés décrits en référence aux figures 3 et suivantes peuvent être mis en oeuvre avec l'installation I de la figure 1, moyennant l'adaptation de celle-ci, notamment en ce qui concerne la structure de la tête d'impression 10.

Dans le mode de réalisation de la figure 3, le corps 14 de la tête d'impression 10 est cylindrique et à section circulaire et porte douze buses 12 réparties sur une surface en forme de disque. Aucune buse n'est positionnée au centre géométrique 142 du corps 14 de la tête d'impression 10. La figure 3 montre cinq positions de la tête d'application 10, pour lesquelles sont repérées des droites D perpendiculaires à la direction F1 de la trajectoire T en des points P de la trajectoire correspondant à ces cinq positions.

Les buses 12 sont réparties sur un cercle centré sur le centre géométrique 142 du corps 14 dont on considère qu'il est aligné avec un point P de la trajectoire T. Dans cet exemple, les buses 12A sélectionnées sont les buses qui se trouvent, par rapport à la droite D, sur l'avant de celle-ci dans le sens de progression de la tête d'impression 10 le long de la trajectoire T. Ainsi, une ligne L12 qui passe par les buses 12A sélectionnées les plus proches des autres buses 12B non sélectionnées est, dans cet exemple, un diamètre du corps 14 de la tête d'impression 10, ce diamètre étant superposé à la ligne D en chaque point P de la trajectoire. Les buses 12A sélectionnées comprennent également les buses situées sur la ligne L12.

La ligne L12 délimite l'ensemble des buses 12A par rapport aux buses 12B. Comme il s'agit d'un diamètre du corps 14, elle est confondue avec sa droite de régression D12.

Les buses 12B non sélectionnées se trouvent à l'arrière de la ligne L12 et de la droite D dans le sens de progression de la tête d'impression le long de la trajectoire T.

Dans ce mode de réalisation, les buses 12A sélectionnées et activées sont réparties sur un arc de cercle C12 situé, par rapport à la droite L12, sur l'avant du corps 14 en cours de déplacement le long de la trajectoire T, ce qui permet une application régulière du produit de revêtement sur la largeur du cordon T, sans création de surépaisseur, ce qui pourrait être le cas si toutes les buses de la tête d'impression 10 étaient activées sur toute la trajectoire.

Dans la mesure où le déplacement du corps 14 de la tête d'impression 10 le long de la trajectoire T a lieu par translation rectiligne ou circulaire, les buses 12A sélectionnées et activées pour l'application du produit de revêtement destiné à constituer le cordon C changent entre les cinq configurations représentées à la figure 3.

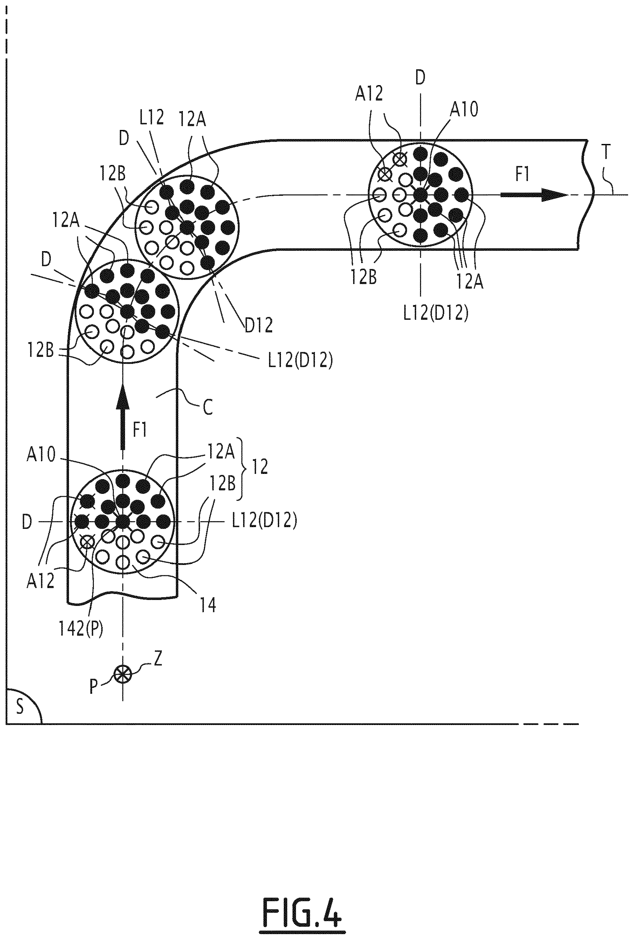

Dans le mode de réalisation de la figure 4, le corps 14 de la tête d'impression 10 est également cylindrique et à section circulaire et centré sur un centre géométrique 142 qui correspond à une buse 12, comme dans le premier mode de réalisation.

Dans ce mode de réalisation, les buses 12 sont réparties sur toute la surface du corps 14 et non pas disposées en un seul cercle. En pratique, les buses sont réparties sur une surface en forme de disque, en plusieurs cercles concentriques, centrés sur le centre 142.

Dans cet exemple également, en fonction du déplacement en translation rectiligne et circulaire de la tête d'impression 10 le long de la trajectoire T, différents groupes de buses 12A sont sélectionnés en fonction de la direction F1 de la trajectoire T. Le groupe de buses 12A est délimité, par rapport aux autres buses 12B, par une ligne L12 qui tient compte d'une droite D perpendiculaire à la direction de la trajectoire T en chaque point P de cette trajectoire T.

Dans l'exemple, le groupe de buses sélectionné 12A correspond approximativement à un demi-disque, les buses sélectionnées 12A étant disposées sur des arcs de cercle. Dans les première et quatrième positions, où la tête d'impression se déplace en ligne droite, la ligne L12 est rectiligne et s'étend selon un diamètre du corps 14, en étant superposée à la droite D au point P considéré de la trajectoire. Dans les deuxième et troisième positions, qui correspondent respectivement à l'entrée dans un virage et à la sortie de ce virage, les buses sélectionnées 12A disposées à la frontière avec les buses non sélectionnées 12B s'étendent selon la ligne L12 qui est courbe, c'est-à-dire non rectiligne, mais qui approxime la droite D perpendiculaire à la trajectoire T. Dans cette exemple, la ligne L12 dans les deuxième et troisième positions est une ligne brisées formée d'une succession de segments de droite, comme dans la troisième position de la figure 2. Ici, la ligne L12 est choisie, parmi les lignes qu'il est possible de définir avec les buses 12 sur le corps 14, comme celle dont la droite de régression D12 est la plus proche possible de la droite D. La méthode d'approximation est au choix du programmateur, comme dans le premier mode de réalisation.

Dans ce mode de réalisation, la tête d'impression porte vingt-et-une buses.

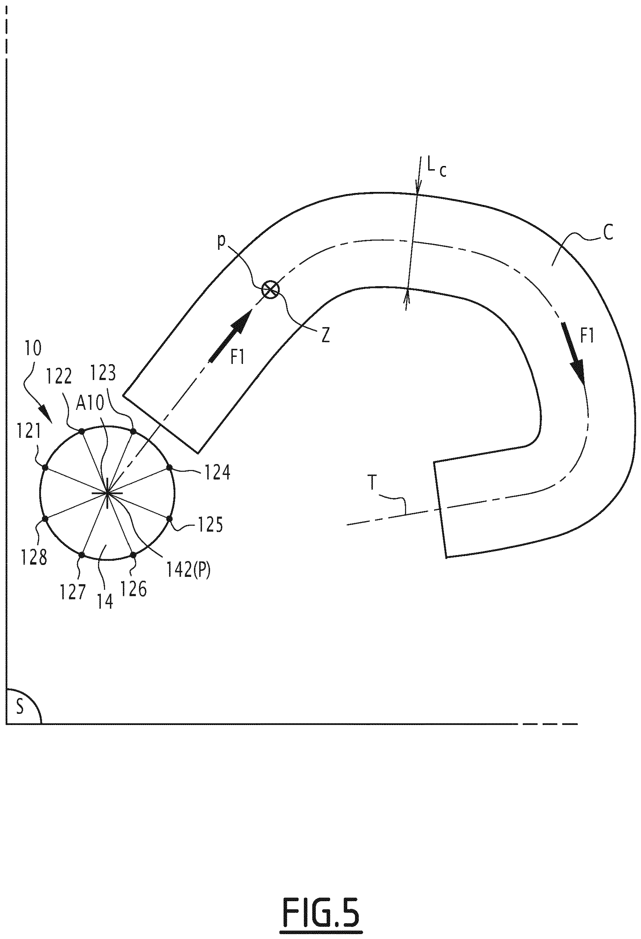

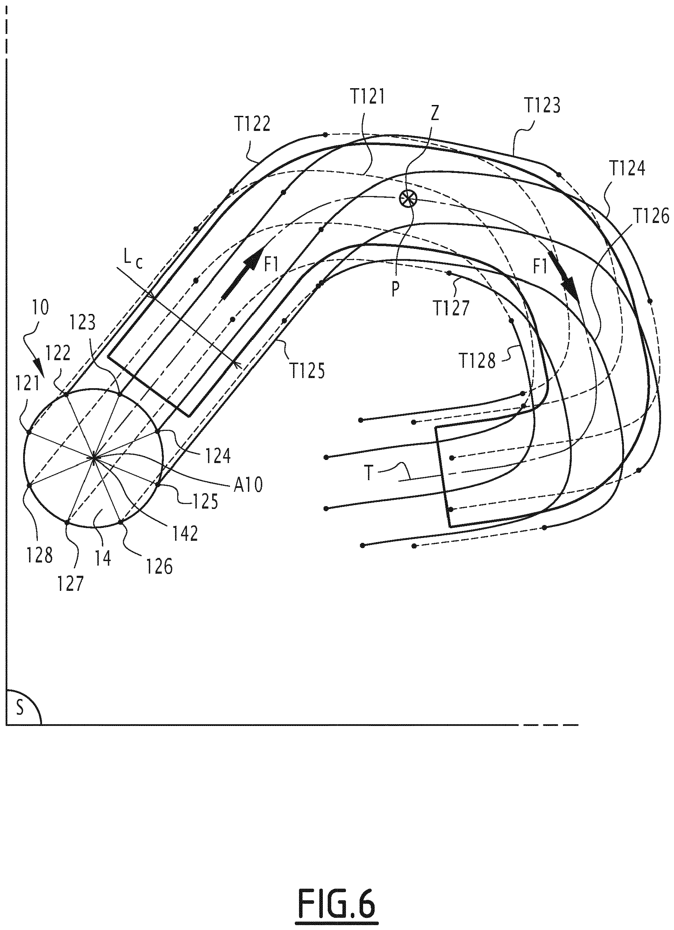

Les figures 5 et 6 montrent le cas de création d'un cordon C au moyen d'une tête d'impression 10 dont le corps 14 est à cylindrique et section circulaire et porte huit buses 12 réparties à la périphérie d'une surface en forme de disque. On note 142 le centre géométrie du corps 14, ce centre géométrique étant déplacé le long d'une trajectoire prédéfinie T dont la direction d'avance est repérée par les flèches F1, comme dans les modes de réalisation précédents.

La géométrie de la trajectoire T est telle que le cordon C a une forme complexe, avec un premier virage relativement large et un deuxième virage relativement serré.

Comme cela ressort de la figure 6 où les traits pleins représentent la trace des buses 12A sélectionnées et les traits pointillés représentent la trace des buses non sélectionnées 12B, il est possible d'opérer une sélection des buses en fonction de la direction d'avance du corps 14 le long de la trajectoire T.

On repère les huit buses 12 avec des numéros de référence distincts, de 121 à 128. On repère sur la figure 6 la trajectoire T12i d'une buse 12i, avec i compris entre 1 et 8. Sur chaque trajectoire T12i, la trace de la buse 12i est représenté en traits pointillés lorsque la buse 12i n'est pas sélectionnée, donc est du type 12B au sens des explications qui précèdent, et en trait plein lorsque cette buse est sélectionnée, donc est du type 12A au sens des explications qui précèdent. Par exemple, la trajectoire T121 montre que la buse 121 n'est sélectionnée qu'à partir du début du tronçon rectiligne terminal de la trajectoire T, après le deuxième virage. Au contraire, la trajectoire T122 montre que la buse 122 est sélectionnée au début de la trajectoire T, jusqu'à l'entrée dans le premier virage, puis dans le dernier tronçon rectiligne, après le deuxième virage. La trajectoire T123 de la buse 123 montre que celle-ci est sélectionnée dans le premier tronçon rectiligne de la trajectoire T, sur l'essentiel du premier virage, puis désélectionnée. La trajectoire T124 de la buse 124 montre que celle-ci est sélectionnée au début et jusqu'au milieu de la portion entre les premier et deuxième virages de la trajectoire T, puis désélectionnée. La trajectoire T125 de la buse 125 montre que celle-ci est sélectionnée jusqu'à l'entrée du deuxième virage. La trajectoire T126 de la buse 126 montre que celle-ci est sélectionnée à partir de l'entrée dans le premier virage et jusqu'à la sortie du deuxième virage. La trajectoire T127 de la buse 127 montre que celle-ci est sélectionnée de la sortie du premier virage jusqu'à la fin du déplacement. La trajectoire T128 de la huitième buse montre que celle-ci est sélectionnée de la fin du premier virage jusqu'à la fin du déplacement.

On comprend que, dans ce cas, les buses 12i, qui constituent les buses 12A sélectionnées pour être activées en un point P de la trajectoire T, sont les buses situées vers l'avant du déplacement de la tête d'impression 10, selon une approche comparable à celle envisagée pour le deuxième mode de réalisation, mais avec un nombre de buses différent et une mise en oeuvre plus élaborée, du fait de la géométrie relativement complexe du cordon C. Ainsi, dans cet exemple, au départ de la trajectoire, les buses 12A sélectionnées sont les buses 122 à 125. En entrée du premier virage, les buses 12A sélectionnées sont les buses 122 à 126. Entre les premier et deuxième virages, les buses 12A sélectionnées sont les buses 125, 126 et 127. En sortie du deuxième virage, les buses 12A sélectionnées sont les buses 121, 122, 127 et 128.

On note L_{C} la largeur du cordon C à appliquer, mesurée perpendiculairement à la direction F1 de la trajectoire T, en supposant que cette largeur est constante. On note L10 la largeur utile de la tête d'impression, c'est-à-dire la largeur d'implantation des buses 12j sur le corps 14, également mesurée perpendiculairement à la direction de la trajectoire T. Ici, la largeur L10 est égale au diamètre du corps.

La figure 6 montre que certaines buses 12i peuvent être sélectionnées en un point P de la trajectoire T, puisque leur trajectoire T12i est en trait continu, alors qu'elles ne sont pas en regard de la trace du cordon C à réaliser. Tel est par exemple le cas des buses 122 et 125 dans la première partie de la trajectoire, avant le premier virage. Ceci provient du fait que la largeur L10 est strictement supérieure à la largeur L_{C}

Dans ce cas, on prévoit que les buses 12A sélectionnées ne sont pas forcément toutes activées. Il peut être prévu une étape de contrôle supplémentaire au cours de laquelle il est vérifié qu'une buse donnée 12i, qui fait partie des buses 12A sélectionnées, est bien en regard de la trace du cordon C sur la surface à revêtir S, c'est-à-dire de la zone de la surface à revêtir S qui est destinée à être revêtue par le cordon C. Si tel est le cas, l'activation de la buse 12i en question est validée et la buse est activée. Dans le cas contraire, cette activation est empêchée.

Dans l'exemple de la figure 6, les buses 126, 127 et 128 sont sélectionnées entre les deux virages mais ne sont pas activées, puisque le produit de revêtement issu de ces buses tomberait en dehors de la trace du cordon C sur la surface à revêtir S. Il en va de même pour les buses 122, 126 et 127 après le deuxième virage.

Ainsi, l'invention permet d'utiliser une même tête d'impression 1 pour appliquer des cordons C de largeurs L_{C} différentes, ces largeurs L_{C} étant inférieures ou égales à la largeur utile L10 de la tête d'impression, puisque l'activation des buses sélectionnées 12A tient compte de la largeur L_{C} du cordon C en chaque point P de la trajectoire.

Si la largeur L_{C} varie le long du cordon C, la vérification envisagée ci-dessus est adaptée.

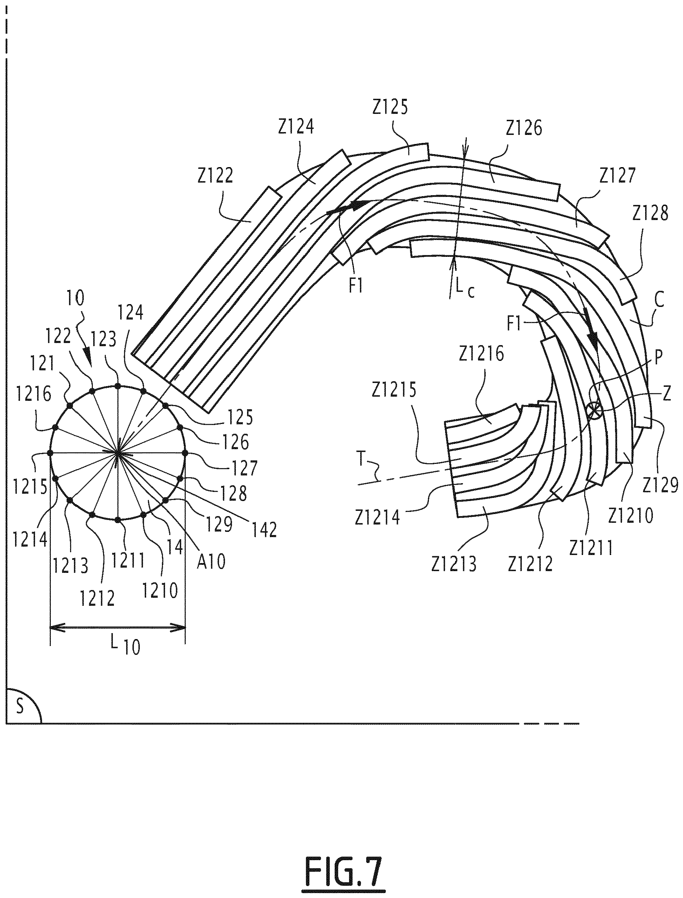

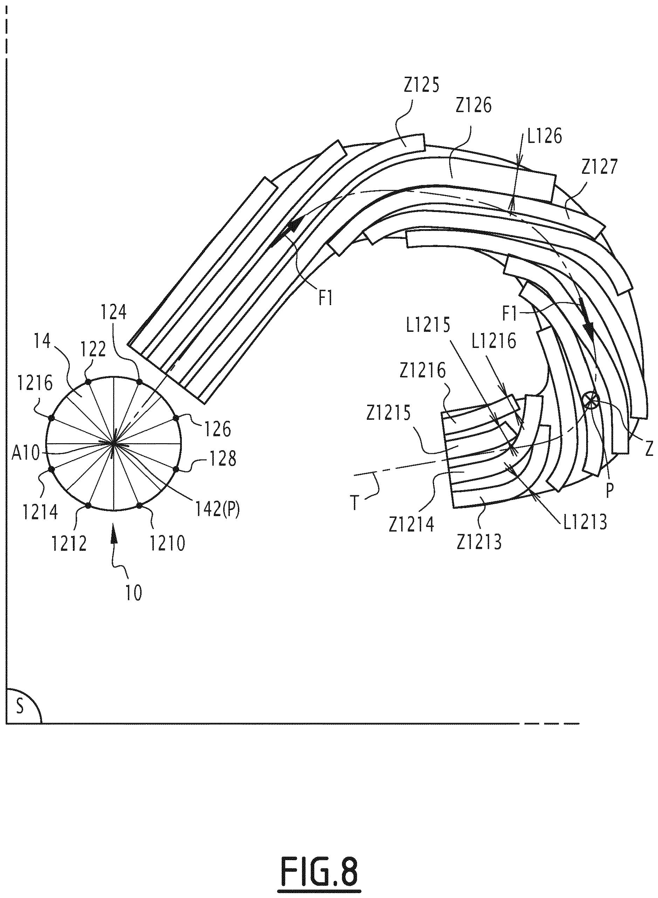

Dans les modes de réalisation des figures 7 et 8, le corps 14 de la tête d'impression 10 porte seize buses 12j, avec j compris entre 1 et 16, ces buses étant réparties à la périphérie d'une surface en forme de disque du corps 14. Sur les figures 7 et 8, on a repéré avec la référence Z12j la zone du cordon C appliquée par la buse 12j, pour j compris entre 1 et 16.

La figure 7 montre que le cordon C, qui a la même géométrie que celle représentée aux figures 5 et 6, est constituée d'une succession de portions de cordon constituées par les zones Z12j, ce qui est possible grâce à la sélection de certaines des buses 12j, en chaque point de la trajectoire T, pour constituer des buses sélectionnées au sens des buses sélectionnées 12A du premier mode de réalisation et pour être activées en ce point.

On remarque que toutes le buses ne sont pas utilisées pour constituer le cordon C. En effet, il n'y a pas de zones correspondant à la buse 121 ou à la buse 123 sur cette figure 7.

On remarque sur cette figure 7 qu'un espace relativement important existe entre les zones Z125 et Z126, d'une part, et entre les zones Z126 et Z127, d'autre part, sur l'extérieur du premier virage, alors que les zones Z1213, Z1214, Z1215 et Z1216 se chevauchent sur l'intérieur du deuxième virage.

Dans le cas de cordons de mastics, on va chercher à avoir une surface complètement revêtue. Dans le cas de cordons de colles ou d'insonorisant, on va chercher à avoir un volume appliqué.

Ce problème est traité dans la mise en oeuvre du procédé représenté à la figure 8, où la largeur L126 de la zone Z126 est augmentée localement, à la fin de cette zone dans le sens de déplacement de la tête d'impression le long de la trajectoire T, afin d'éviter les « manques » dans le cordon C. Pour ce faire, l'activation de la buse 126 peut être modifiée dans la zone correspondante à l'extérieur du premier virage, par exemple en augmentant sa fréquence d'activation et/ou la durée d'ouverture de sa vanne d'éjection.

De façon comparable, le démarrage des buses 1213, 1214 et 1216 est retardé à la sortie du deuxième virage, de façon à n'appliquer que le produit revêtement sortant de la buse 1215 dans cette partie du cordon C, pour éviter le recouvrement visible à la figure 7, un tel recouvrement pouvant conduire à une surépaisseur localisée du cordon C. Ainsi, dans cette partie du cordon C, la largeur L1213, L1215 et L1216 de chaque zone Z1213, Z1215 ou Z1216 est temporairement réduite à zéro, pour tenir compte de la distance entre ces zones et la zone Z1214 adjacente, par exemple en réduisant à zéro leur fréquence d'activation et/ou la durée d'ouverture de leurs vannes d'éjection.

De la même façon, la terminaison d'une zone Z12j peut être anticipée, en d'autre termes sa largueur réduite à zéro, par exemple en réduisant à zéro sa fréquence d'activation et/ou la durée d'ouverture de sa vanne d'éjection, pour ne pas interférer avec une ou des zones adjacentes.

Selon une variante non représentée de l'invention, la transition entre une largeur nulle et une largeur nominale d'une zone Z12j peut être progressif, par exemple en faisant varier progressivement la fréquence d'activation et la durée d'éjection de chaque buse.

Dans les exemples envisagés ci-dessus, la largeur des zones de revêtement issues des buses sélectionnées est adaptée en jouant sur le débit de sortie de produit de revêtement issu de chaque buse, lequel est contrôlé par la fréquence d'activation et/ou la durée d'ouverture de la vanne d'éjection associée.

La fréquence d'activation des buses peut être contrôlée par un composant piézoélectrique ou d'autre moyens comparables, tels qu'une vanne électromagnétique.

Egalement dans les procédés des figures 7 et 8, il est tenu compte du fait que la largeur utile L10 de la tête d'impression 10 est supérieure à la largeur L_{C} du cordon C, en inhibant l'activation de certaines buses sélectionnées lorsqu'elles ne sont pas en regard de la trace du cordon C sur la surface à revêtir S. Tel est notamment le cas pour les buses 121 et 128, qui sont situées sur les bords latéraux de la tête d'impression dans la partie de la trajectoire T avant le premier virage.

Quel que soit le mode de réalisation, le fait de sélectionner les buses 12A destinées à être activées le long de la trajectoire T en fonction de la direction de la trajectoire permet d'adapter l'application de produit de revêtement à la géométrie du cordon C à réaliser, tout en conservant un mode de déplacement relativement simple de la tête d'application 10, grâce à l'utilisation d'une translation rectiligne ou circulaire, sans mise en rotation de la tête d'impression autour de son axe central ou d'un axe parallèle à celui-ci, tel que l'axe Z.

Dans les modes de réalisation envisagés ci-dessus, la sélection des buses 12A et leur activation sont effectuées de façon automatique au sein de l'unité électronique de pilotage des buses 12, que cette unité soit intégrée au robot 20, comme l'unité 30 de l'installation I de la figure 1, ou extérieure à ce robot.

Dans le cas où la surface S à revêtir est gauche, c'est-à-dire non plane, la trajectoire T est adaptée et n'est pas forcément plane. En outre, la tête d'impression peut pivoter en cours de déplacement autour de deux axes transversaux B10 et C10 définis par le corps 14 et perpendiculaires à l'axe A10 et entre eux. Dans ce cas également, la tête d'impression 10 ne tourne pas autour de son axe central A10, même si le déplacement de la tête d'impression dans le référentiel de la surface n'est pas une simple combinaison de translations. Ceci permet de conserver la surface de la tête d'impression 14 sur laquelle sont montées les buses 12 globalement parallèle à la surface S à revêtir pour déposer un cordon C sur une zone courbe, telle que la zone de fixation du pare-brise identifiée à la figure 1.

Selon une variante non représentée de l'invention, la tête d'impression 10 est fixe et la surface S à revêtir est déplacée par un robot en regard des buses 12, avec un mouvement de translation rectiligne ou circulaire. Dans ce cas, dans le référentiel de la surface S, la tête d'impression 10 et les buses 12 se déplacent selon une trajectoire T. Dans ce cas également, si l'unité électronique 30 ne connaît pas au préalable la trajectoire T, le robot supportant la pièce à revêtir peut être équipé d'un accéléromètre ou d'une centrale d'inertie permettant de reconstituer localement en temps réel la trajectoire T suivie par la tête d'impression 10 dans le référentiel de la surface S à revêtir. Dans ce cas également, comme la tête d'impression est fixe, le robot est programmé pour garder le plus possible le plan moyen de la surface à revêtir globalement parallèle au plan des buses défini par la surface du corps 14 sur laquelle elles sont montées.

Que ce soit la surface ou la tête d'impression qui est fixe au cours de l'application, le robot utilisé pour assurer le déplacement relatif entre la tête d'impression et la surface à revêtir peut être de tout type connu, par exemple multiaxe comme représenté à la figure 1, de type Scara, de type réciprocateur.

Selon une autre variante non représentée de l'invention, les buses 12 ou certaines d'entre elles sont disposées en arc de cercle, alors que le corps 14 n'est pas à section circulaire.

L'invention est représentée sur la figures dans les cas où la tête d'impression comporte 8, 12, 16, 21 ou 25 buses. Elle est applicable avec d'autres nombres de buses, quelle que soit leur schéma de répartition sur le corps 14. Une répartition des buses selon un ou plusieurs arcs de cercle est toutefois particulièrement avantageuse, comme cela ressort de la présentation des deuxième à sixième modes de réalisation.

L'invention est présentée dans le cas où les buses 12 sont réparties en rangées et en colonne ou en arc de cercle, mais d'autres répartitions sont envisageables, pour autant que les buses sélectionnées sont sur une ligne ou font partie d'une groupe délimité par une ligne dont la droite de régression linéaire est définie comme mentionné ci-dessus.

Les modes de réalisation et variantes envisagés ci-dessus peuvent être combinés entre eux pour générer de nouveaux modes de réalisation de l'invention, dans le cadre des revendications ci-annexées.

## Revendications

1. Procédé d'application d'un cordon (C) de produit de revêtement sur une surface à revêtir (S), au moyen d'une tête d'impression (10) équipée de plusieurs buses (12) centrées chacune sur un axe central (A12), l'application de produit de revêtement ayant lieu en déplaçant la tête d'impression et la surface à revêtir l'une par rapport à l'autre, par un déplacement relatif de la tête d'impression le long d'une trajectoire courbe (T) fixe par rapport à la surface à revêtir, sans mise en rotation de la tête d'impression autour d'un axe (A10) parallèle aux axes centraux (A12) des buses, ce procédé comprenant une étape de sélection de certaines des buses (12A) pour un point (P) de la trajectoire (T), en fonction de la direction (F1) de la trajectoire en ce point et/ou en fonction d'un point (P') précédent de la trajectoire déjà atteint par la tête d'impression et de la direction (F1') de la trajectoire en ce point précédent, et une étape d'activation en ce point (P) des buses sélectionnées, **caractérisé en ce que** les buses (12A) sélectionnées sont disposées sur une ligne (L12), ou font partie d'un groupe de buses délimité par une ligne (L12), dont la droite de régression (D12) est confondue avec une droite (D) perpendiculaire à la direction de la trajectoire (T) ou la plus proche possible d'une droite perpendiculaire à la direction de la trajectoire parmi les lignes qu'il est possible de définir avec les buses (12) de la tête d'impression (10).

2. Procédé selon la revendication 1, **caractérisé en ce que** les buses (12) de la tête d'impression (10) sont disposées en rangées et en colonnes et **en ce que**, pendant l'étape de sélection, les buses (12A) d'une portion de certaines rangées et/ou d'une portion de certaines colonnes sont sélectionnées ensemble pour activation.

3. Procédé selon la revendication 1, **caractérisé en ce que** les buses (12) de la tête d'impression (10) sont disposées sur au moins un arc de cercle et **en ce que**, pendant l'étape de sélection, les buses (12A) d'une portion de l'arc de cercle sont sélectionnées ensemble pour activation.

4. Procédé selon l'une des revendications précédentes, **caractérisé en ce que** la largueur (L126, L1213, L1215, L1216) d'une zone (Z126, Z1213, Z1215, Z1216) de revêtement issu d'une buse sélectionnée et activée (126, 1213, 1215, 1216) est adaptée en fonction de la distance entre cette zone et une zone adjacente (Z125, Z127, Z1214) issue d'une autre buse (125, 127, 1214).

5. Procédé selon la précédente, **caractérisé en ce que** la largeur (L126) de la zone de revêtement (Z126) est adaptée en faisant varier une fréquence d'activation d'un dispositif d'alimentation de la buse sélectionnée et activée (126).

6. Procédé selon l'une des revendications 4 ou 5, **caractérisé en ce que** la largeur (L1213, L1215, L1216) de la zone de revêtement issue de la buse sélectionnée et normalement activée (1213, 1215, 1216) est localement réduite à zéro pour ne pas interférer avec une ou des zones adjacentes (Z1214) de produit de revêtement.

7. Procédé selon l'une des revendications précédentes, **caractérisé en ce que** la largeur (L10) de la tête d'impression, mesurée perpendiculairement à la direction (F1) de la trajectoire, est supérieure ou égale à la largeur (L_{C}) du cordon (C) à appliquer, la largeur du cordon étant également mesurée perpendiculairement à la direction de la trajectoire, et **en ce que**, parmi les buses (12A) sélectionnées lors de l'étape de sélection, seules sont activées celles qui sont disposées en regard de la trace du cordon sur la surface à revêtir (S).

8. Procédé selon l'une des revendications précédentes, **caractérisé en ce que** des informations de direction et de vitesse relatives de la tête d'impression (10) par rapport à la surface (S) à revêtir sont fournies à l'unité électronique (30) de contrôle par une unité de commande (24) d'un robot (20) permettant le déplacement relatif de la tête d'impression et de la surface à revêtir.

9. Procédé selon l'une des revendications 1 à 7, **caractérisé en ce que** des informations de direction et de vitesse relatives de la tête d'impression (10) par rapport à la surface (S) à revêtir sont fournies à l'unité électronique (30) de contrôle par un accéléromètre ou une centrale à inertie embarqué sur un robot permettant le déplacement relatif de la tête d'impression et de la surface à revêtir.

10. Installation (I) d'application d'un cordon (C) de produit de revêtement sur une surface à revêtir (S), cette installation comprenant :
- une tête d'impression (10) équipée de plusieurs buses (12) centrées chacune sur un axe central (A12);
- un robot multiaxe (20) contrôlé par une unité électronique de commande (24) et permettant le déplacement relatif de la tête d'impression et de la surface à revêtir, sans mise en rotation, autour d'un axe (A10) parallèle aux axes centraux (A12) des buses, le long d'une trajectoire courbe (T) fixe par rapport à la surface à revêtir ;
- une unité (30) de contrôle de chaque buse, configurée pour sélectionner et pour activer certaines buses (12A) de la tête d'impression en un point (P) de la trajectoire (T) en fonction, au moins, de la direction (F1) de la trajectoire en ce point et/ou en fonction d'un point (P') précédent de la trajectoire déjà atteint par la tête d'impression et de la direction (F1') de la trajectoire en ce point précédent
**caractérisée en ce que** l'unité de contrôle (30) est configurée pour sélectionner des buses (12A) qui sont disposées sur une ligne (L12), ou font partie d'un groupe de buses délimité par une ligne (L12), dont la droite de régression (D12) est confondue avec une droite (D) perpendiculaire à la direction de la trajectoire (T) ou la plus proche possible d'une droite perpendiculaire à la direction de la trajectoire parmi les lignes qu'il est possible de définir avec les buses (12) de la tête d'impression (10).

11. Installation selon la revendication 10, **caractérisée en ce que** les buses (12) de la tête d'impression (10) sont disposées sur au moins un arc de cercle et **en ce que**, de préférence, un corps (14) de la tête d'impression a une section circulaire.

12. Installation selon la revendication 10, **caractérisée en ce que** les buses (12) de la tête d'impression (10) sont disposées en rangées et en colonnes et **en ce que** l'unité de contrôle (30) est configurée pour sélectionner et activer ensemble des buses (12A) d'une portion de certaines rangées et/ou d'une portion de certaines colonnes.

## Patentansprüche

1. Verfahren zum Aufbringen eines Strangs (C) eines Beschichtungsmaterials auf eine zu beschichtende Oberfläche (S) mittels eines Druckkopfs (10) mit mehreren Düsen (12), die jeweils auf einer Mittelachse (A12) zentriert sind, wobei das Auftragen des Beschichtungsmaterials durch Bewegen des Druckkopfs und der zu beschichtenden Oberfläche durch eine Relativbewegung des Druckkopfs entlang einer gekrümmten Bahn (T), die in Bezug auf die zu beschichtende Oberfläche fixiert ist, erfolgt, wobei der Druckkopf nicht um eine Achse (A10) parallel zu den Mittelachsen (A12) der Düsen gedreht wird, wobei dieses Verfahren einen Schritt des Auswählens bestimmter Düsen (12A) für einen Punkt (P) der Bahn (T) in Abhängigkeit von der Richtung (F1) der Bahn an diesem Punkt und/oder in Abhängigkeit von einem vorhergehenden Punkt (P') der Bahn, der bereits vom Druckkopf erreicht wurde und der Richtung (F1') der Bahn in diesem vorhergehenden Punkt, und einen Schritt der Aktivierung der ausgewählten Düsen in diesem Punkt (P), **dadurch gekennzeichnet, dass** die ausgewählten Düsen (12A) auf einer Linie (L12) angeordnet sind oder Teil einer Gruppe von Düsen sind, die von einer Linie (L12) begrenzt wird, deren Regressionsgerade (D12) mit einer Geraden (D) zusammenfällt, die senkrecht zur Richtung der Bahn (T) oder so nah wie möglich an einer zur Richtung der Bahn senkrechten Geraden unter den Linien liegt, die mit den Düsen (12) des Druckkopfs (10) definiert werden können.

2. Verfahren nach Anspruch 1, **dadurch gekennzeichnet, dass** die Düsen (12) des Druckkopfs (10) in Reihen und Spalten angeordnet sind und dass während des Auswahlschrittes die Düsen (12A) eines Teils bestimmter Reihen und/oder eines Teils bestimmter Spalten gemeinsam zur Aktivierung ausgewählt werden.

3. Verfahren nach Anspruch 1, **dadurch gekennzeichnet, dass** die Düsen (12) des Druckkopfs (10) auf mindestens einem Kreisbogen angeordnet sind und dass während des Auswahlschritts die Düsen (12A) eines Abschnitts des Kreisbogens gemeinsam zur Aktivierung ausgewählt werden.

4. Verfahren nach einem der vorhergehenden Ansprüche, **dadurch gekennzeichnet, dass** die Breite (L126, L1213, L1215, L1216) eines Bereichs (Z126, Z1213, Z1215, Z1216) der Beschichtung aus einer ausgewählten und aktivierten Düse (126, 1213, 1215, 1216) an den Abstand zwischen diesem Bereich und einem benachbarten Bereich (Z125, Z127, Z1214) aus einer anderen Düse (125, 127, 1214) angepasst ist.

5. Verfahren nach dem vorhergehenden Anspruch, **dadurch gekennzeichnet, dass** die Breite (L126) des Beschichtungsbereichs (Z126) durch Variieren einer Aktivierungsfrequenz einer ausgewählten und aktivierten Düsenzuführung (126) angepasst wird.

6. Verfahren nach einem der Ansprüche 4 oder 5, **dadurch gekennzeichnet, dass** die Breite (L1213, L1215, L1216) des Beschichtungsbereichs aus der ausgewählten und normalerweise aktivierten Düse (1213, 1215, 1216) lokal auf Null reduziert wird, um nicht mit einer oder mehreren benachbarten Zonen (Z1214) des Beschichtungsmaterials zu interferieren.

7. Verfahren nach einem der vorhergehenden Ansprüche, **dadurch gekennzeichnet, dass** die Breite (L10) des Druckkopfes, die senkrecht zur Richtung (F1) der Bahn gemessen wird, größer oder gleich der Breite (L_{C}) des aufzutragenden Strangs (C) ist, wobei die Breite des Strangs senkrecht zur Richtung der Bahn gemessen wird und dass von den im Auswahlschritt ausgewählten Düsen (12A) nur diejenigen aktiviert werden, die gegenüber der Spur des Strangs auf der zu beschichtenden Oberfläche (S) angeordnet sind.

8. Verfahren nach einem der vorhergehenden Ansprüche, **dadurch gekennzeichnet, dass** Informationen über die relative Richtung und Geschwindigkeit des Druckkopfs (10) in Bezug auf die zu beschichtende Oberfläche (S) der elektronischen Steuereinheit (30) von einer Steuereinheit (24) eines Roboters (20) zugeführt werden, der die relative Bewegung des Druckkopfs und der zu beschichtenden Oberfläche ermöglicht.

9. Verfahren nach einem der Ansprüche 1 bis 7, **dadurch gekennzeichnet, dass** Informationen über die relative Richtung und Geschwindigkeit des Druckkopfs (10) in Bezug auf die zu beschichtende Oberfläche (S) an die der elektronischen Steuereinheit (30) von einem Beschleunigungsmesser oder einer Trägheitszentrale an Bord eines Roboters, der die relative Bewegung des Druckkopfs und der zu beschichtenden Oberfläche ermöglicht, übermittelt werden.

10. Anlage (I) zum Auftragen eines Strangs (C) eines Beschichtungsmaterials auf eine zu beschichtende Oberfläche (S), wobei die Anlage umfasst:
- einen Druckkopf (10), der mit mehreren Düsen (12) ausgestattet ist, die jeweils auf einer Mittelachse (A12) zentriert sind;
- einen mehrachsigen Roboter (20), der von einer elektronischen Steuereinheit (24) gesteuert wird und die relative Bewegung des Druckkopfs und der zu beschichtenden Oberfläche ermöglicht, ohne Drehung um eine Achse (A10), die parallel zu den Mittelachsen (A12) der Düsen verläuft, entlang einer gekrümmten Bahn (T), die in Bezug auf die zu beschichtende Oberfläche fixiert ist;
- eine Einheit (30) zur Steuerung jeder Düse, die so konfiguriert ist, dass sie bestimmte Düsen (12A) des Druckkopfs in einem Punkt (P) der Bahn (T) in Abhängigkeit von mindestens der Richtung (F1) der Bahn in diesem Punkt und/oder in Abhängigkeit von einem vorherigen Punkt (P'), den der Druckkopf bereits erreicht hat, und der Richtung (F1') der Bahn an diesem vorherigen Punkt
**dadurch gekennzeichnet, dass** die Steuereinheit (30) so konfiguriert ist, dass sie Düsen (12A) auswählt, die auf einer Linie (L12) angeordnet sind oder Teil einer Gruppe von Düsen sind, die durch eine Linie (L12) begrenzt sind, deren Regressionsgerade (D12) mit einer Linie (D) senkrecht zur Richtung der Bahn (T) oder so nah wie möglich an einer Linie senkrecht zur Richtung der Bahn unter den Linien zusammenfällt, die mit den Düsen (12) des Druckkopfs (10) definiert werden können.

11. Anlage nach Anspruch 10, **dadurch gekennzeichnet, dass** die Düsen (12) des Druckkopfs (10) auf mindestens einem Kreisbogen angeordnet sind und dass vorzugsweise ein Körper (14) des Druckkopfs einen kreisförmigen Querschnitt hat.

12. Anlage nach Anspruch 10, **dadurch gekennzeichnet, dass** die Düsen (12) des Druckkopfs (10) in Reihen und Spalten angeordnet sind und dass die Steuereinheit (30) so konfiguriert ist, dass sie gemeinsam die Düsen (12A) eines Teils bestimmter Reihen und/oder eines Teils bestimmter Spalten auswählt und aktiviert.

## Claims

1. A method for applying a bead (C) of coating product to a surface to be coated (S), by means of a print head (10) equipped with a plurality of nozzles (12), each nozzle being centered on a central axis (A12), the application of coating product taking place by moving the print head and the surface to be coated relative to each other by a relative print head movement along a curved trajectory (T), fixed in relation to the surface to be coated, without rotating the print head about an axis (A10) parallel to the central axes (A12) of the nozzles, this method comprising a step of selecting certain nozzles (12A) for a point (P) of the trajectory (T) based on the direction (F1) of the trajectory at this point and/or based on a previous point (P') of the trajectory already reached by the print head and of the direction (F1') of the trajectory at this previous point, and a step of activating the selected nozzles at this point (P), **characterized in that** the selected nozzles (12A) are arranged in a line (L12) or are part of a nozzle group delimited by a line (L12), the regression line (D12) of which coincides with a line (D) perpendicular to the trajectory direction (T) or as close as possible to a line perpendicular to the trajectory direction from among the lines that can be defined with the nozzles (12) of the print head (10).

2. The method according to claim 1, **characterized in that** the nozzles (12) of the print head (10) are arranged in rows and columns and **in that**, during the selection step, the nozzles (12A) of a portion of certain rows and/or of a portion of certain columns are selected together for activation.

3. The method according to claim 1, **characterized in that** the nozzles (12) of the print head (10) are arranged on at least one arc of a circle and that, during the selection step, the nozzles (12A) of a portion of the arc of a circle are selected together for activation.

4. The method according to any of the preceding claims, **characterized in that** the width (L126, L1213, L1215, L1216) of an area (Z126, Z1213, Z1215, Z1216) for coating coming from a selected and activated nozzle (126, 1213, 1215, 1216) is adapted based on the distance between this area and an adjacent area (Z125, Z127, Z1214) coming from another nozzle (125, 127, 1214).

5. The method according to the preceding claim, **characterized in that** the width (L126) of the coating area (Z126) is adapted by varying an activation frequency of a feeder of the selected and activated nozzle (126).

6. The method according to any of claims 4 or 5, **characterized in that** the width (L1213, L1215, L1216) of the coating area from the selected and normally activated nozzle (1213, 1215, 1216) is reduced locally to zero, so as not to interfere with adjacent coating product area(s) (Z1214).

7. The method according to any of the preceding claims, **characterized in that** the width (L10) of the print head, measured perpendicularly to the direction (F1) of the trajectory, is greater than or equal to the width (L_{C}) of the bead (C) to be applied, the width of the bead also being measured perpendicularly to the trajectory direction, and **in that**, among the nozzles (12A) selected during the selection step, only those arranged facing the track of the bead on the surface to be coated (S) are activated.

8. The method according to one of the preceding claims, **characterized in that** information on the relative direction and speed of the print head (10) in relation to the surface (S) to be coated is supplied to the electronic control unit (30) by a control unit (24) of a robot (20) allowing relative movement of the print head and the surface to be coated.

9. The method according to one of claims 1 to 7, **characterized in that** information on the relative direction and speed of the print head (10) in relation to the surface (S) to be coated is supplied to the electronic control unit (30) by an accelerometer or inertial unit embedded on a robot allowing relative movement of the print head and the surface to be coated.

10. An installation (I) for applying a coating product bead (C) to a surface to be coated (S), this installation comprising:
- a print head (10) equipped with several nozzles (12), each centered on a central axis (A12);
- a multi-axis robot (20) controlled by an electronic control unit (24) and allowing relative movement of the print head and the surface to be coated, without rotation, around an axis (A10) parallel to the central axes (A12) of the nozzles, along a curved trajectory (T), fixed in relation to the surface to be coated;
- a control unit (30) for each nozzle, configured to select and to activate certain nozzles (12A) of the print head at a point (P) of the trajectory (T) based on, at least, the direction (F1) of the trajectory at this point and/or based on a previous trajectory point (P') already reached by the print head and the trajectory direction (F1') at this previous point,
**characterized in that** the control unit (30) is configured to select nozzles (12A), which are arranged on a line (L12), or are part of a nozzle group delimited by a line (L12), the regression line (D12) of which coincides with a line (D) perpendicular to the trajectory direction (T) or as close as possible to a line perpendicular to the trajectory direction from among the lines that can be defined with the nozzles (12) of the print head (10).

11. The installation according to claim 10, **characterized in that** the nozzles (12) of the print head (10) are arranged on at least one arc of a circle and that preferably a body (14) of the print head has a circular cross section.

12. The installation according to claim 10, **characterized in that** the nozzles (12) of the print head (10) are arranged in rows and columns and **in that** the control unit (30) is configured to select and activate together nozzles (12A) of a portion of certain rows and/or of a portion of certain columns.
